# EUROPEAN PATENT SPECIFICATION

(11) **EP 4 439 000 B1**
(45) Date of publication and mention of the grant of the patent: **10.12.2025**
(21) Application number: 24166972.0
(22) Date of filing: 27.03.2024
(51) Int. Cl.: G01B 5/00, G01B 7/00, G01B 5/02, G01B 7/016, B23Q 17/20

(54) **MEASURING DEVICE FOR PROFILED BARS**
MESSGERÄT FÜR PROFILSTAHL
APPAREIL DE MESURE POUR BARRES PROFILÉES

(30) Priority: 31.03.2023 IT 202300006249
(43) Date of publication of application: 02.10.2024
(73) Proprietor: Emmegi S.p.A., 41019 Soliera (Modena) (IT)
(72) Inventor: RAMONDINO, Marco, 20137 Milano (IT); CICCALDO, Antonio, 20094 Corsico (MI) (IT); LOLLI, Francesco, 42019 Scandiano (RE) (IT)
(74) Representative: Colò, Chiara

(56) References cited:
- EP-A1- 2 432 618
- EP-A1- 4 006 479
- CN-A- 112 284 355
- US-A- 5 249 366
- US-A1- 2013 027 026

## Description

The invention relates to a measuring device for measuring profiled bars, more specifically for measuring the length of the profiled bars, that is to say, their dimension in a direction parallel to a main extension direction or longitudinal direction of each profiled bar.

The measuring device according to the invention is suitable for being mounted in a machine for machining profiled bars, for example in a machine having an operating head which is able to perform cutting, milling, drilling and other operations on the profiled bars which involve removal of chippings.

The measuring device according to the invention is particularly suitable for use in a machine having an operating head on which many tools different from each other can be mounted, the tools being intended to be picked up automatically by the operating head to perform the corresponding machining operation.

The profiled bars which are presented to the operating head or which are moved away from the operating head have a known nominal length, along a main extension direction thereof. However, it may occur that, due to machining tolerances, errors in the initial dimensions of the bar, or machining errors which have occurred subsequently, the profiled bar has an actual length significantly different from the nominal length.

Moreover, if the cross-section of the profiled bar is complex and the profiled bar has been cut along a cutting plane which is not perpendicular to the longitudinal direction, measuring the nominal length may be difficult.

If the subsequent work operations have as a reference an end of the profiled bar arranged close to the operating head, an error in the length of the profiled bar may cause difficulties in coupling the profiled bar with other profiled bars intended to produce, for example, a door or window frame.

For these reasons, it is worth measuring precisely the length of the profiled bar which is arranged close to the operating head.

This may be done by detecting the position of a free end of the profiled bar, which allows the length to be known if the position of the other end is known.

Some types of machines for machining profiled bars comprise a carriage which moves back and forth in a direction parallel to a main longitudinal dimension of the profiled bars in order to perform the required machining. A contact plate is supported by the carriage and is selectively lowered when it is necessary to measure the length of a profiled bar. The carriage is then moved until the contact plate abuts against the free end of the profiled bar. At this point, knowing the position of the contact plate, it is possible to determine the length of the profiled bar.

Although the contact plate operates in a satisfactory manner in the case of machines for machining profiled bars which have limited dimensions, it may result in drawbacks due to its significant dimensions in the case of machines of large dimensions, in which the carriage is, for example, shaped like a portal. These drawbacks are due mainly to the need to cover most of the operating field of the machine, which determines a significant size of the contact plate, with consequent difficulties in maintaining a high precision of the surface of the contact plate due to errors in planarity and structural deformations.

In order to overcome the drawbacks due to the significant dimensions of the contact plate supported by the portal, it has been thought to use a contact member having a spherical head, of the type normally used for testing operations, in order to detect the position of the free end of the profiled bar. However, the contact members of this type are quite expensive and delicate and could be easily damaged if they were used to make contact with cutting edges, such as in the case of profiled bars having a free end cut at 45° relative to a longitudinal axis of the profiled bar, or profiled bars having one or more tabs which project from a perimeter zone of the profiled bar.

Another possibility which has been considered consists in using a laser sensor for detecting the position of the free end of the profiled bar. The laser sensor gives repeatable measurements if it operates in constant conditions, whilst it can provide discordant measurements in the case of variations in operating conditions, for example in the colour of the profiled bar, the brightness and the like. In these cases, the laser sensor provides imprecise measurements, unless it is frequently recalibrated.

Some examples of measuring devices of known type are disclosed in EP 4006479, US 2013/027026, CN 112284355, US 5249366.

An object of the invention is to improve the measuring devices for measuring the length of a profiled bar.

Another object is to provide a measuring device for measuring the length of a profiled bar, which has a limited size.

Another object is to provide a measuring device for measuring the length of a profiled bar, which has a good robustness.

A further object is to provide a measuring device for measuring the length of a profiled bar, which provides precise measurements even when the operating conditions change.

According to the invention, there is provided a measuring device for measuring a longitudinal dimension of a profiled bar, the measuring device comprising:
- a removable connector suitable for removably engaging in a spindle of a machine for machining profiled bars, so that the spindle supports the measuring device,
- a contact element for abutting against an end zone of a profiled bar,
- a sensor for generating a signal when the contact element has come into contact with the end zone and for sending the signal to a receiver through a wireless connection.

Owing to the invention, it is possible to obtain a measuring device having a simple structure, which is able to effectively measure a longitudinal dimension of a profiled bar.

The measuring device according to this invention is intended to be supported by the spindle of the machine for machining profiled bars in which the measuring device has to be inserted. This makes it possible to use the spindle for moving the measuring device towards the end zone of the profiled bar. In this way it is possible to obtain a measuring device having a particularly simple structure, since it is not necessary to use a dedicated movement device for moving the measuring device.

Moreover, owing to the removable connector, the measuring device can easily be coupled to, and uncoupled from, the spindle of the machine for machining profiled bars, even automatically. The measuring device may be interchangeable with respect to a normal tool intended to be mounted on the machine for machining profiled bars.

Since the sensor included in the measuring device is configured to send the signal to the receiver using a wireless connection, it is possible to avoid the use of wires which could obstruct during the movements of the spindle.

The contact element is configured to make contact with an end zone of the profiled bar of which the longitudinal dimension is to be measured. In this way it is possible to perform a precise measurement, which is not affected by the variation of the conditions outside the measuring device, which could, on the other hand, influence the precision of other types of sensor, for example a laser sensor.

In an embodiment, the contact element is shaped like a contact plate configured for abutting against the end zone of the profiled bar.

Using a contact plate, it is possible to obtain a reliable and robust contact element, which is difficult to be damaged even when it is brought into contact with an edge or a tab of a profiled bar.

In an embodiment, the measuring device comprises a further contact plate, arranged at the opposite side of the contact plate relative to a body of the measuring device.

This makes it possible to use the measuring device for measuring the length of two profiled bars located on opposite sides of the measuring device, that is to say, downstream and upstream of the measuring device, without having to move the profiled bars to be measured.

In an embodiment, the sensor included in the measuring device is of the piezoelectric type.

During operation, this type of sensor provides a potential difference, which may provide the energy necessary for the wireless transmission of the signal coming from the sensor.

In this way a measuring device is obtained which has low energy consumption and a particularly high energy efficiency.

Moreover, the piezoelectric sensor may make the use of a battery superfluous, which considerably reduces the maintenance of the measuring device.

The invention can be better understood and implemented with reference to the accompanying drawings which illustrate a non-limiting example embodiment of it and wherein:
Figure 1 is a perspective view showing an operating zone of a machine for machining profiled bars, in which a measuring device is provided for measuring the length of the profiled bars;
Figure 2 is a front view of the operating zone of Figure 1 ;
Figure 3 is an enlarged perspective view showing the measuring device of Figure 1;
Figure 4 is a view like that of Figure 3, wherein some parts have been omitted to make visible the inside of the measuring device.

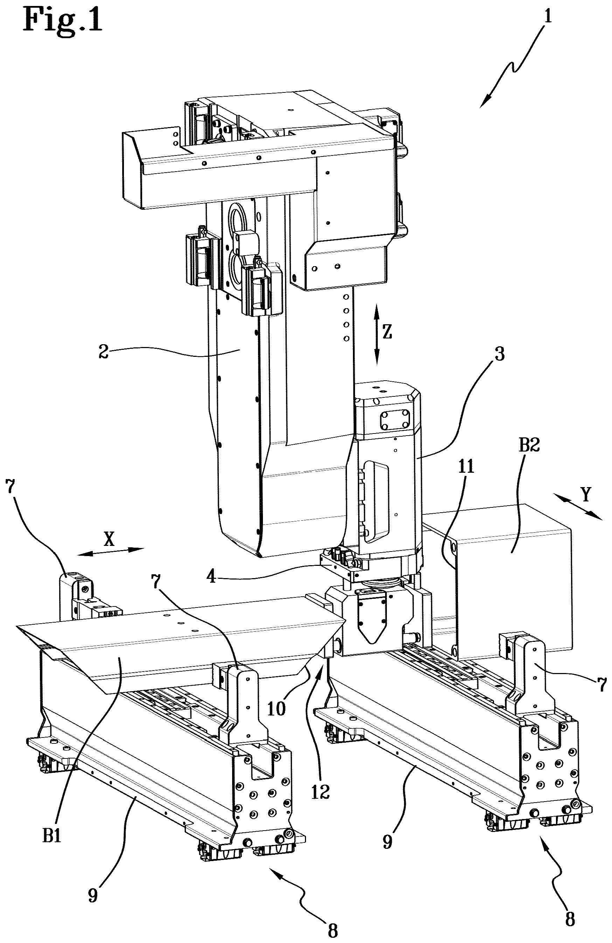

Figure 1 shows a machining unit 1 of a machine for machining profiled bars.

The profiled bars may be made of metallic materials, such as aluminium, steel or the like, synthetic polymeric materials, such as polyvinyl chloride (PVC) or composite materials.

The profiled bars may be intended to form door or window frames but they may also be used for other applications, such as the construction of supporting frames or other products.

The machining unit 1 comprises an operating head 2 which is able to perform machining operations of various types, for example drilling, milling and the like, on the profiled bars.

The operating head 2 comprises a tool holder spindle, which in the example shown is an electric spindle 3.

When there is a profiled bar to be machined in the machining unit 1, the electric spindle 3 supports and rotates a tool, not illustrated, to perform the required machining operation on the profiled bar. For this purpose, the electric spindle 3 comprises a coupling element 4, suitable for shapingly coupling with a connector of the tool, for example owing to a cone-shaped coupling.

The operating head 2 has various degrees of freedom, so as to move the electric spindle 3 towards, or alternatively move the electric spindle 3 away from, various faces of the profiled bar and perform the requested operations.

More specifically, the operating head 2, and with it the electric spindle 3, is movable forwards and backwards along a direction X, which coincides with a longitudinal direction in which the profiled bars to be machined mainly extend.

Moreover, the operating head 2, and with it the electric spindle 3, is movable along a further direction Y, which extends horizontally and is perpendicular to the direction X, as well as along a vertical direction Z, perpendicular to the direction X and to the further direction Y. This allows the operating head 2 to be positioned in the most suitable position for performing the requested operations.

The machine for machining the profiled bars comprises at least one gripping device 8 for gripping each profiled bar and keeping it in a correct position during the machining operations performed by the operating head 2. Each gripping device 8 may comprise at least one pair of gripping elements 7, at least one of which is movable relative to the other along a guide 9 in a clamping direction arranged transversally, in particular perpendicularly, to the direction X.

Thus, a gripping element 7 may alternatively move towards the other gripping element 7 of the same gripping device 8 for clamping the profiled bar, or move away from the other gripping element 7 for disengaging the profiled bar.

According to the example shown, two gripping devices 8 are provided, the gripping devices being arranged, respectively, upstream and downstream of the machining unit 1 along the direction X. Each gripping device 8 of the example shown comprises a single pair of gripping elements 7. It is also possible to provide gripping devices 8 comprising several pairs of gripping elements 7, particularly if the gripping devices 8 have to support profiled bars having a significant length.

The gripping devices 8 can also be movable along the direction X for moving away the ends of the profiled bars, leaving to the operating head 2 the space necessary for the machining operations.

In the example shown, two profiled bars B1 and B2 are shown, located upstream and downstream of the operating head 2. The profiled bar B1 is delimited by an end section 10 which may be cut at 45° relative to the direction X. The further profiled bar B2 is, on the other hand, delimited by a further end section 11 which may lie in a plane perpendicular to the direction X.

It is understood that the profiled bars B1 and B2 may have transversal cross-sections, and respective end cross-sections, shaped differently from that shown in the drawings.

The end section 10 of the profiled bar B1 faces towards the electric spindle 3. The further end section 11 of the further profiled bar B2 also faces towards the electric spindle 3.

A measuring device 12 is furthermore provided for measuring the length of a profiled bar positioned in or close to the machining unit 1.

The measuring device 12 is configured to detect the position of an end section 10, 11 or end zone of the profiled bar of which the length is to be measured. This allows the length of the profiled bar to be determined, since the position of the end section of the profiled bar opposite to that from which the position is detected is known.

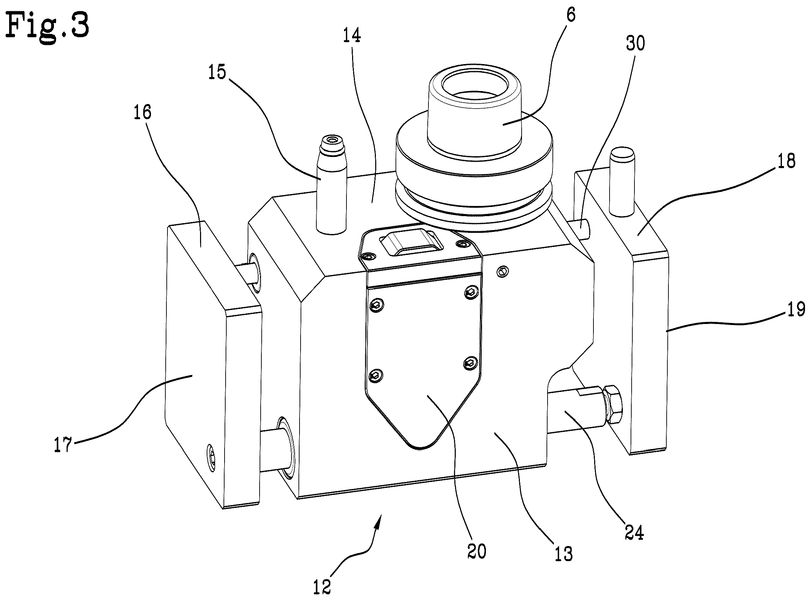

The measuring device 12 comprises a box-shaped body 13, shown in particular in Figure 3. The box-shaped body 13 may be removably fixed to the electric spindle 3 owing to a connector 6 included in the measuring device 12. The connector 6 projects from a surface of the box-shaped body 13, in particular from an upper surface 14 of the latter. The connector 6 is capable of shapingly coupling with the coupling element 4 of the electric spindle 3. For this purpose, the connector 6 uses the same type of coupling by which a tool can be removably fixed to the electric spindle 3. The measuring device 12 may therefore be mounted on the electric spindle 3 so as to be interchangeable with the tools which are used by the operating head 2 for machining the profiled bar, that is to say, in place of the tools.

A pin 15 projects from the box-shaped body 13, in particular from the upper surface 14, the pin 15 being suitable for engaging in a hole, not illustrated, made in the electric spindle 3. The pin 15 acts as an anti-rotation element, preventing the box-shaped body 13 from rotating relative to the electric spindle 3.

The measuring device 12 further comprises at least one contact element 16 intended to abut against the end section of the profiled bar of which the length is to be measured. According to the example shown, the contact element 16 is intended to make contact with the end section 10 of the profiled bar B1.

The contact element 16 is delimited by a contact surface 17 for coming into contact with the end section of the profiled bar to be measured. The contact surface 17 may be a flat surface extending transversally, in particular perpendicularly, to the direction X.

The contact element 16 may be shaped like a plate.

In the example shown, a further contact element 18 is provided, the further contact element 18 being arranged at the opposite side of the box-shaped body 13 relative to the contact element 16. In other words, the contact element 16 and the further contact element 18 extend from opposite faces of the box-shaped body 13, so that the box-shaped body 13 is interposed between the contact element 16 and the further contact element 18.

The further contact element 18 is delimited by a further contact surface 19, which may be flat and which extends transversally, in particular perpendicularly, to the direction X. According to the example shown, the further contact element 18 is suitable for abutting against the further end section 11 of the profiled bar B2, so as to measure the length thereof.

The measuring device 12 is thus able to measure the length of two different profiled bars B1 and B2, arranged at opposite sides of the operating head 2, owing to the contact element 16 and the further contact element 18. This makes it possible to measure the length of two profiled bars B1 and B2, located, respectively, upstream and downstream of the operating head 2, without moving the profiled bars B1 and B2.

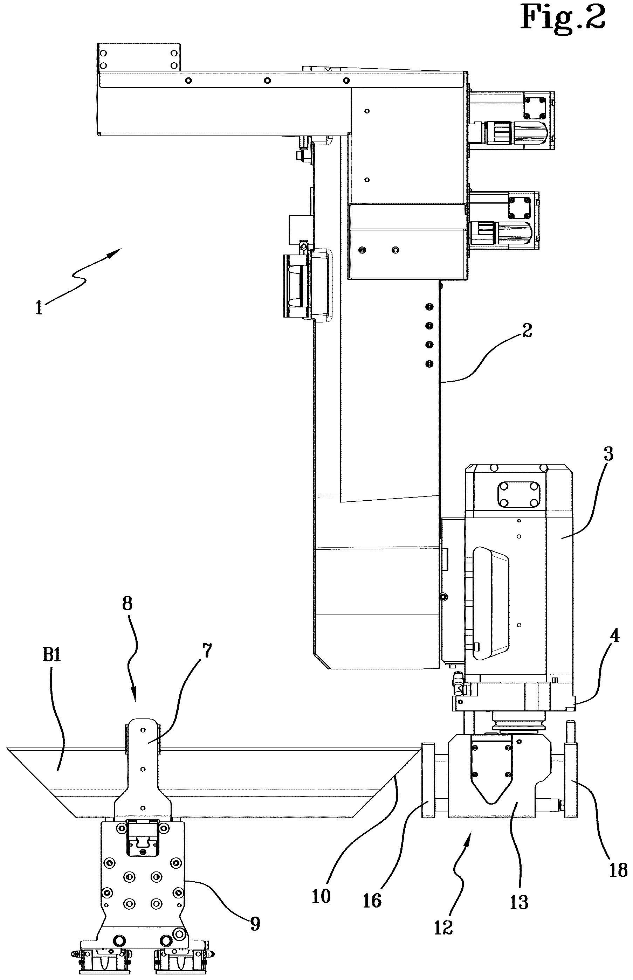

It is also possible to use the measuring device 12 for measuring only one profiled bar, as shown in Figure 2. In this case, one of the two contact elements 16, 18 remains inactive.

Moreover, it is possible to use the measuring device 12 for interacting with both the ends of a single profiled bar, in the case, for example, of a profiled bar having been cut or the position of any end of the profiled bar not being precisely known. In this case, the contact element 16 is used on one of the ends and the further contact element 18 on the other end, after repositioning the operating head 2.

In an alternative embodiment not illustrated, the measuring device 12 may have a single contact element, for example the contact element 16, whilst the further contact element 18 is not provided.

The measuring device 12 further comprises a sensor 20, more clearly visible in Figure 3, which may comprise a piezoelectric element. The sensor 20 is fixed to the box-shaped body 13. The sensor 20 comprises a body 21, which houses the piezoelectric element, from which a pin 22 protrudes. In the example shown, the pin 22 extends vertically. The pin 22 can move vertically relative to the body 21 of the sensor 20. In particular, the pin 22 can be pushed towards the outside of the body 21 by an elastic element, not illustrated, and can move towards the inside of the body 21 when the elastic element is compressed.

A cam follower element 23 is fixed to one end of the pin 22 located outside the body 21, in particular at the lower end of the pin 22. In the example illustrated, the cam follower element 23 is shaped like a wheel which is free to rotate about a respective axis, for example arranged horizontally.

The pin 22 and the cam follower element 23 are arranged inside the box-shaped body 13.

The measuring device 12 further comprises a control rod 24 which may extend parallel to the direction X, that is to say, horizontally. The control rod 24 has a first end 25, fixed relative to the contact element 16. A second end 27 of the control rod 24 is, on the other hand, fixed relative to the further contact element 18.

The control rod 24 has, in a central region thereof, a narrowing 33 defining a cam profile 28.

The cam follower element 23 is normally positioned at the centre of the narrowing 33.

The control rod 24 is supported by a pair of bushings 29, for example of the recirculating ball type, which are fixed relative to the box-shaped body 13.

The control rod 24 is slidable in the direction X relative to the bushings 29, and is therefore slidable relative to the box-shaped body 13.

As mentioned above, the sensor 20 comprises a piezoelectric element, positioned in such a way as to be deformed when the pin 22 is moved along the direction Z, in particular towards the inside of the body 21. When this happens, a potential difference is generated due to the piezoelectric effect.

A transmitter, not illustrated, is also provided, the transmitter being housed inside the box-shaped body 13 and being suitable for communicating with a receiver, not illustrated. The receiver is outside the measuring device 12. More specifically, the transmitter is configured for sending a signal to the receiver when the piezoelectric element is deformed, which - as described in more detail below - indicates that an end section of the profiled bar to be measured has been identified.

The transmitter can be powered electrically owing to the potential difference generated by the piezoelectric element. This makes it unnecessary, in the majority of cases, to use a battery which would be expensive, bulky and require relatively frequent maintenance.

The transmitter is configured for communicating with the receiver by a wireless connection, for example by a radio connection. This prevents the use of electrical cables for connecting the transmitter to the receiver, which could be troublesome when the operating head 2 is moved.

The measuring device 12 further comprises a shaft 30, which connects the contact element 16 and the further contact element 18 in an upper region thereof. The shaft 30 is supported by a pair of sliding bushings 31, which make it possible for the shaft 30 to move in the direction X relative to the box-shaped body 13.

The control rod 24 and the shaft 30 have respective end regions which protrude from opposite parts of the box-shaped body 13 to engage with the contact element 16 and, respectively, with the further contact element 18.

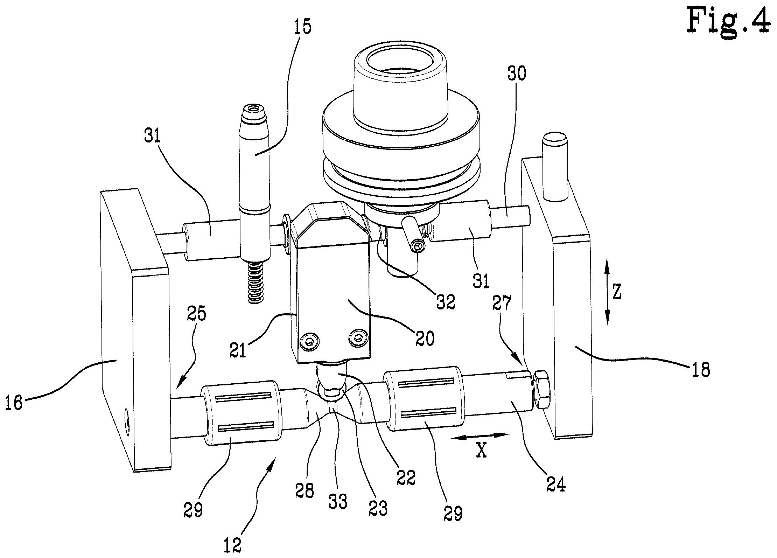

Elastic means 32, partly visible in Figure 4, are provided long the shaft 30 for generating a preloading on the contact element 16 and on the further contact element 18. The elastic means 32 also aim to return the contact element 16 and the further contact element 18 to a rest position, when those contact elements move away from the corresponding profiled bar after identifying its end section. In the rest position, the pin 22 included in the sensor 20 is positioned at the central section of the narrowing 33.

When it is required to measure the length of a profiled bar, for example of the profiled bar B1, the measuring device 12 is mounted on the electric spindle 3, by coupling the connector 6 with the coupling element 4. The measuring device 12 replaces the tool which is mounted on the electric spindle 3 when it is necessary to perform a mechanical machining on the profiled bar.

If the operating head 2 is able to automatically pick up the tools from a storage area, the measuring device 12 may be mounted on the electric spindle 3 without manual intervention by the operator.

The profiled bar B1 is in a fixed position along the direction X and is locked in this position by the gripping device 8. The position of the end section of the profiled bar B1 furthest from the measuring device 12 is known.

The operating head 2 is now moved parallel to the direction X until the contact element 16 abuts against the end section 10 of the profiled bar B1, as shown in Figure 2. The contact between the contact element 16 and the profiled bar B1 does not necessarily have to be occur on the entire end section 10. Depending on the geometry of the end section 10, the contact element 16 may touch the profiled bar B1 even only along an edge, as shown in Figure 2.

While continuing to push the contact element 16 towards the profiled bar B1, the contact element 16 is pushed towards the box-shaped body 13, which remains in a fixed position along the direction X. The elastic means 32 are consequently compressed.

The control rod 24, which is fixed relative to the contact element 16, moves parallel to the direction X, whilst the sensor 20 remains in a fixed position along the direction X.

The cam follower element 23 moves along the cam profile 28, moving away from the central section of the narrowing 33. Consequently, the cam follower element 23 rises along the vertical direction Z and the pin 22 penetrates partly inside the body 21 of the sensor. In this way, the pin 22 deforms the piezoelectric element, for example by compressing it.

Due to the deformation, the piezoelectric element generates a potential difference. This indicates that the contact element 16 has made contact against the end section 10 of the profiled bar B1, which allows the position of the end section 10 to be uniquely determined, in order to calculate the length of the profiled bar B1.

Moreover, the potential difference generated by the piezoelectric element makes it possible to electrically power the transmitter included in the measuring device 12, so that the latter can transmit the signal to an external receiver, using the wireless connection.

A control unit of the machine for machining profiled bars, connected to the receiver, may thereby be informed that the contact element 16 has reached the end section 10 of the profiled bar B1. From the knowledge of the position of the contact element 16 when the end section 10 is touched, it is possible to calculate the length of the profiled bar.

The operating head 2 is moved along the direction X owing to one or more actuators to which are associated position transducers, not shown, which allow the position of the actuators and, therefore, of the operating head 2 to be known with precision. Since the measuring device 12 is mounted on the electric spindle 3 which is supported by the operating head 2, by knowing the position of the actuators it is possible to determine the position of the contact element 16 or the further contact element 18, when the contact element 16 or the further contact element 18 touches the end of the corresponding profiled bar.

The further contact element 18, if present, operates in the same way when determining the length of a profiled bar B2 facing the further contact element 18.

In this way, a single measuring device 12 is able to perform operations for measuring the profiled bars at two opposite faces, which makes the measuring device 12 particularly versatile.

## Claims

1. A measuring device for measuring a longitudinal dimension of a profiled bar (B1, B2), comprising:
- a removable connector (6) suitable for removably engaging in a spindle (3) of a machine for machining profiled bars, so that the spindle (3) supports the measuring device (12),
- at least one contact element (16) for abutting against an end zone (10) of a profiled bar,
- a sensor (20) for generating a signal when the contact element (16) has come into contact with the end zone (10) and for sending the signal to a receiver through a wireless connection,
**characterised in that** the contact element (16) is shaped like a plate delimited by a substantially flat contact surface (17), the contact surface (17) being suitable for abutting against the end zone (10) of the profiled bar, the contact surface (17) extending transversely to the longitudinal dimension of the profiled bar.

2. The measuring device according to claim 1, wherein the sensor (20) comprises a piezoelectric element.

3. The measuring device according to claim 2, and further comprising a transmitter for transmitting said signal to the receiver, the piezoelectric element being connected to the transmitter so that the difference in potential generated by the piezoelectric element powers the transmitter.

4. The measuring device according to claim 2 or 3, and further comprising a control element (24) fixed relative to the contact element (16) and having a cam profile (28), wherein the sensor (20) comprises a cam follower element (23) which engages with the cam profile (28) so as to deform the piezoelectric element when the contact element (16) touches the end zone (10) of the profiled bar.

5. The measuring device according to claim 4, wherein the control element comprises a control rod (24) which extends parallel to the longitudinal dimension of the profiled bar, the control rod (24) having a transversal cross-section which has a variation in cross-section (33) that defines the cam profile (28).

6. The measuring device according to claim 5, wherein the sensor (20) comprises a body (21) in which the piezoelectric element is housed, the sensor (20) further comprising a pin (22) which protrudes from the body (21) and is slidable relative to the body (21) transversely to the longitudinal dimension of the profiled bar, the cam follower element (23) being provided at an end of the pin (22).

7. The measuring device according to claim 5 or 6, wherein the variation in cross-section of the control rod (24) comprises a narrowing of cross-section (33) and wherein the cam follower element (23) is received in the narrowing of cross-section (33) in an inactive configuration in which the contact element (16) is detached from the end zone (10) of the profiled bar.

8. The measuring device according to any preceding claim, wherein the contact surface (17) extends perpendicularly to the longitudinal dimension of the profiled bar.

9. The measuring device according to any preceding claim, and further comprising a further contact element (18) for abutting against a further end zone (11) of a further profiled bar, the sensor (20) being interposed between the contact element (16) and the further contact element (18) relative to a direction parallel to the longitudinal dimension of the profiled bar.

10. The measuring device according to claim 9, wherein the further contact element comprises a further plate (18) delimited by a further contact surface (19) which is substantially flat and is suitable for abutting against the further end zone (11) of the further profiled bar, the further contact surface (19) extending transversely, for example perpendicularly, to a longitudinal dimension of the further profiled bar.

11. The measuring device according to claim 9 or 10, wherein the contact element (16) and the further contact element (18) are rigidly connected to each other, so as to form an assembly in which the contact element (16) is fixed relative to the further contact element (18), said assembly being slidable relative to the sensor (20) in a direction parallel to the longitudinal dimension of the profiled bar.

12. The measuring device according to any preceding claim, wherein the wireless connection is a radio connection.

13. A machine for machining profiled bars, comprising an operating head (2) for performing machining operations on the profiled bars, the operating head (2) having an electric spindle (3), the machine further comprising a measuring device (12) according to any preceding claim, wherein the removable connector (6) of the measuring device (12) is coupled with the electric spindle (3).

14. The machine according to claim 13, and further comprising at least one tool which can be coupled in a removable manner to the operating head (2) for performing a machining operation on a profiled bar, wherein the measuring device (12) is interchangeable with the tool.

## Patentansprüche

1. Messgerät zum Messen einer Längsabmessung einer Profilstange (B1, B2), umfassend:
- ein abnehmbares Verbindungsstück (6), das geeignet ist, abnehmbar mit einer Spindel (3) einer Maschine zur Bearbeitung von Profilstangen in Eingriff zu gelangen, so dass die Spindel (3) das Messgerät (12) trägt,
- zumindest ein Kontaktelement (16) zum Anschlagen gegen einen Endbereich (10) einer Profilstange,
- einen Sensor (20) zum Erzeugen eines Signals, wenn das Kontaktelement (16) mit dem Endbereich (10) in Kontakt gekommen ist, und zum Senden des Signals an einen Empfänger über eine drahtlose Verbindung,
**dadurch gekennzeichnet, dass** das Kontaktelement (16) wie eine Platte geformt ist, die durch eine im Wesentlichen flache Kontaktfläche (17) begrenzt ist, wobei die Kontaktfläche (17) dazu geeignet ist, gegen den Endbereich (10) der Profilstange anzuschlagen, und wobei sich die Kontaktfläche (17) in Querrichtung zu der Längsausdehnung der Profilstange erstreckt.

2. Messgerät nach Anspruch 1, wobei der Sensor (20) ein piezoelektrisches Element umfasst.

3. Messgerät nach Anspruch 2, und ferner umfassend einen Sender zum Senden des Signals an den Empfänger, wobei das piezoelektrische Element mit dem Sender verbunden ist, so dass die vom piezoelektrischen Element erzeugte Potentialdifferenz den Sender speist.

4. Messgerät nach Anspruch 2 oder 3, und ferner umfassend ein Steuerelement (24) das in Bezug auf das Kontaktelement (16) fixiert ist und das ein Nockenprofil (28) aufweist, wobei der Sensor (20) ein Nockenfolgerelement (23) umfasst, das mit dem Nockenprofil (28) in Eingriff gelangt, um das piezoelektrische Element zu verformen, wenn das Kontaktelement (16) den Endbereich (10) der Profilstange berührt.

5. Messgerät nach Anspruch 4, wobei das Steuerelement eine Steuerstange (24) umfasst, die sich parallel zu der Längsabmessung der Profilstange erstreckt, wobei die Steuerstange (24) einen Querschnitt aufweist, der eine Querschnittsänderung (33) aufweist, die das Nockenprofil (28) definiert.

6. Messgerät nach Anspruch 5, wobei der Sensor (20) einen Körper (21) umfasst, in dem das piezoelektrische Element untergebracht ist, wobei der Sensor (20) ferner einen Stift (22) umfasst, der von dem Körper (21) hervorsteht und der in Bezug auf den Körper (21) in Querrichtung zu der Längsabmessung der Profilstange verschiebbar ist, wobei das Nockenfolgerelement (23) an einem Ende des Stifts (22) vorgesehen ist.

7. Messgerät nach Anspruch 5 oder 6, wobei die Querschnittsänderung der Steuerstange (24) eine Verengung des Querschnitts (33) umfasst und wobei das Nockenfolgeelement (23) in der Verengung des Querschnitts (33) in einer inaktiven Konfiguration aufgenommen wird, in der das Kontaktelement (16) von dem Endbereich (10) der Profilstange abgelöst ist.

8. Messgerät nach einem beliebigen der vorhergehenden Ansprüche, wobei sich die Kontaktfläche (17) orthogonal zu der Längsabmessung der Profilstange erstreckt.

9. Messgerät nach einem beliebigen der vorhergehenden Ansprüche, und ferner umfassend ein weiteres Kontaktelement (18) zum Anschlagen gegen einen weiteren Endbereich (11) einer weiteren Profilstange, wobei der Sensor (20) zwischen dem Kontaktelement (16) und dem weiteren Kontaktelement (18) in Bezug auf eine Richtung parallel zu der Längsabmessung der Profilstange angeordnet ist.

10. Messgerät nach Anspruch 9, wobei das weitere Kontaktelement eine weitere Platte (18) umfasst, die durch eine weitere Kontaktfläche (19) begrenzt ist, die im Wesentlichen flach ist und die geeignet ist, gegen den weiteren Endbereich (11) der weiteren Profilstange anzuschlagen, wobei sich die weitere Kontaktfläche (19) in Querrichtung, zum Beispiel orthogonal, zu einer Längsabmessung der weiteren Profilstange erstreckt.

11. Messgerät nach Anspruch 9 oder 10, wobei das Kontaktelement (16) und das weitere Kontaktelement (18) starr miteinander verbunden sind, so dass sie eine Baugruppe bilden, in der das Kontaktelement (16) in Bezug auf das weitere Kontaktelement (18) fixiert ist, wobei die Baugruppe in Bezug auf den Sensor (20) in einer Richtung parallel zu der Längsabmessung der Profilstange verschiebbar ist.

12. Messgerät nach einem beliebigen der vorhergehenden Ansprüche, wobei die drahtlose Verbindung eine Funkverbindung ist.

13. Maschine zum Bearbeiten von Profilstangen, umfassend einen Arbeitskopf (2) zum Ausführen von Bearbeitungsvorgängen an den Profilstangen, wobei der Arbeitskopf (2) eine elektrische Spindel (3) aufweist, und wobei die Maschine ferner ein Messgerät (12) nach einem beliebigen der vorhergehenden Ansprüche umfasst, wobei das abnehmbare Verbindungsstück (6) des Messgeräts (12) mit der elektrischen Spindel (3) gekoppelt ist.

14. Maschine nach Anspruch 13, und ferner zumindest ein Werkzeug umfassend, das abnehmbar mit dem Arbeitskopf (2) gekoppelt werden kann, um einen Bearbeitungsvorgang an einer Profilstange durchzuführen, wobei das Messgerät (12) mit dem Werkzeug austauschbar ist.

## Revendications

1. Un appareil de mesure pour mesurer une dimension longitudinale d'une barre profilée (B1, B2), comprenant :
- un raccord amovible (6) destiné à s'assujettir de façon amovible dans une broche (3) d'une machine d'usinage de barres profilées, de manière à ce que la broche (3) supporte l'appareil de mesure (12),
- au moins un élément de contact (16) pour venir en butée contre une zone d'extrémité (10) d'une barre profilée,
- un capteur (20) pour générer un signal lorsque l'élément de contact (16) est venu en contact avec la zone d'extrémité (10) et pour envoyer le signal à un récepteur via une connexion sans fil,
**caractérisé en ce que** l'élément de contact (16) est conformé comme une plaque délimitée par une surface de contact (17) essentiellement plate, la surface de contact (17) étant destinée à venir en butée contre la zone d'extrémité (10) de la barre profilée, la surface de contact (17) s'étendant transversalement à la dimension longitudinale de la barre profilée.

2. L'appareil de mesure selon la revendication 1, dans lequel le capteur (20) comprend un élément piézoélectrique.

3. L'appareil de mesure selon la revendication 2, et comprenant en outre un émetteur pour transmettre ledit signal au récepteur, l'élément piézoélectrique étant relié à l'émetteur de manière à ce que la différence de potentiel générée par l'élément piézoélectrique alimente l'émetteur.

4. L'appareil de mesure selon la revendication 2 ou 3, et comprenant en outre un élément de contrôle (24) qui est fixe par rapport à l'élément de contact (16) et ayant un profil de came (28), dans lequel le capteur (20) comprend un élément suiveur de came (23) qui s'assujettit avec le profil de came (28) de manière à déformer l'élément piézoélectrique lorsque l'élément de contact (16) touche la zone d'extrémité (10) de la barre profilée.

5. L'appareil de mesure selon la revendication 4, dans lequel l'élément de contrôle comprend une tige de contrôle (24) qui s'étend parallèlement à la dimension longitudinale de la barre profilée, la tige de contrôle (24) ayant une section transversale qui présente une variation de section (33) qui définit le profil de came (28).

6. L'appareil de mesure selon la revendication 5, dans lequel le capteur (20) comprend un corps (21) à l'intérieur duquel l'élément piézoélectrique est logé, le capteur (20) comprenant en outre une goupille (22) qui dépasse du corps (21) et peut coulisser par rapport au corps (21) transversalement à la dimension longitudinale de la barre profilée, l'élément suiveur de came (23) étant prévu à une extrémité de la goupille (22).

7. L'appareil de mesure selon la revendication 5 ou 6, dans lequel la variation de section de la tige de contrôle (24) comprend un rétrécissement de section (33) et dans lequel l'élément suiveur de came (23) est reçu dans le rétrécissement de section (33) dans une configuration inactive dans laquelle l'élément de contact (16) est détaché de la zone d'extrémité (10) de la barre profilée.

8. L'appareil de mesure selon l'une quelconque des revendications précédentes, dans lequel la surface de contact (17) s'étend perpendiculairement à la dimension longitudinale de la barre profilée.

9. L'appareil de mesure selon l'une quelconque des revendications précédentes, et comprenant en outre un autre élément de contact (18) pour venir en butée contre une autre zone d'extrémité (11) d'une autre barre profilée, le capteur (20) étant interposé entre l'élément de contact (16) et l'autre élément de contact (18) par rapport à une direction parallèle à la dimension longitudinale de la barre profilée.

10. L'appareil de mesure selon la revendication 9, dans lequel l'autre élément de contact comprend une autre plaque (18) délimitée par une autre surface de contact (19) qui est essentiellement plate et est destinée à venir en butée contre l'autre zone d'extrémité (11) de l'autre barre profilée, l'autre surface de contact (19) s'étendant transversalement, par exemple perpendiculairement, à une dimension longitudinale de l'autre barre profilée.

11. L'appareil de mesure selon la revendication 9 ou 10, dans lequel l'élément de contact (16) et l'autre élément de contact (18) sont raccordés l'un à l'autre de façon rigide, de manière à former un ensemble dans lequel l'élément de contact (16) est fixe par rapport à l'autre élément de contact (18), ledit ensemble pouvant coulisser par rapport au capteur (20) dans une direction parallèle à la dimension longitudinale de la barre profilée.

12. L'appareil de mesure selon l'une quelconque des revendications précédentes, dans lequel la connexion sans fil est une connexion radio.

13. Une machine pour l'usinage de barres profilées, comprenant une tête opérationnelle (2) pour exécuter des opérations d'usinage sur les barres profilées, la tête opérationnelle (2) ayant une broche électrique (3), la machine comprenant en outre un appareil de mesure (12) selon l'une quelconque des revendications précédentes, dans laquelle le raccord amovible (6) de l'appareil de mesure (12) est couplé avec la broche électrique (3).

14. La machine selon la revendication 13, et comprenant en outre au moins un outil qui peut être accouplé de façon amovible avec la tête opérationnelle (2) pour exécuter une opération d'usinage sur une barre profilée, dans laquelle l'appareil de mesure (12) est interchangeable avec l'outil.
